# EUROPÄISCHE PATENTSCHRIFT

(11) **EP 3 277 028 B1**
(45) Veröffentlichungstag und Bekanntmachung des Hinweises auf die Patenterteilung: **04.03.2020**
(21) Anmeldenummer: 16182071.7
(22) Anmeldetag: 29.07.2016
(51) Int. Cl.: H04W 48/02, H04W 12/12, H04W 8/22

(54) **VERFAHREN UND VORRICHTUNGEN ZUM BETREIBEN EINES MOBILFUNKNETZWERKS**
METHOD AND DEVICES FOR OPERATING A MOBILE COMMUNICATIONS NETWORK
PROCEDE ET DISPOSITIF DE FONCTIONNEMENT D'UN RESEAU DE RADIOCOMMUNICATION MOBILE

(43) Veröffentlichungstag der Anmeldung: 31.01.2018
(73) Patentinhaber: Deutsche Telekom AG, 53113 Bonn (DE)
(72) Erfinder: Sonntag, Dr. Thomas, 53343 Wachtberg (DE)
(74) Vertreter: Vossius & Partner Patentanwälte Rechtsanwälte mbB

(56) Entgegenhaltungen:
- EP-A1- 2 975 872
- US-A1- 2005 280 557
- US-A1- 2009 249 443
- US-A1- 2016 183 166
- Ngmn Alliance: "NGMN 5G P1 Requirements & Architecture Work Stream End-to-End Architecture Description of Network Slicing Concept Document Type: Final Deliverable (approved) Confidentiality Class: P -Public Authorised Recipients", , 13. Januar 2016 (2016-01-13), XP055303480, Gefunden im Internet: URL:http://www.ngmn.org/uploads/media/1601 13_Network_Slicing_v1_0.pdf [gefunden am 2016-09-16]
- Rachid El Hattachi ET AL: "5G White Paper", , 17. Februar 2015 (2015-02-17), XP055242573, Gefunden im Internet: URL:https://www.ngmn.org/fileadmin/ngmn/co ntent/downloads/Technical/2015/NGMN_5G_Whi te_Paper_V1_0.pdf [gefunden am 2016-01-19]

## Beschreibung

### TECHNISCHES GEBIET

Die Erfindung betrifft die Kommunikation über Mobilfunknetzwerke im Allgemeinen und insbesondere Verfahren und Vorrichtungen zum Betreiben eines Mobilfunknetzwerks.

### TECHNISCHER HINTERGRUND

Das Kommunizieren mittels eines Kommunikationsgeräts, beispielsweise einem Mobiltelefon, über ein Mobilfunknetzwerk (auch als PLMN [Public Land Mobile Network] bezeichnet), das von einem Netzbetreiber (auch als MNO [Mobile Network Operator] bezeichnet) betrieben wird, erfordert in der Regel, dass das Kommunikationsgerät mit einem Teilnehmeridentitätsmodul zum sicheren Speichern von Daten ausgestattet ist, die den Benutzer des Kommunikationsgeräts gegenüber dem Mobilfunknetzwerk eindeutig identifizieren. Beispielsweise kommt bei einem Kommunikationsgerät, das dazu ausgestaltet ist, gemäß dem GSM-Standard (Global System for Mobile Communications) zu kommunizieren, ein austauschbares Teilnehmeridentitätsmodul mit dem Namen SIM (Subscriber Identity Module) üblicherweise in Form einer Chipkarte zum Einsatz. Die SIM-Karte enthält Teilnehmerberechtigungsdaten ("Subscription Credentials") zum Identifizieren und Authentisieren des Teilnehmers, einschließlich einer eindeutigen Teilnehmerkennung in Form einer IMSI (International Mobile Subscriber Identity) und eines Authentisierungsschlüssels Ki. Bevor einem Teilnehmer seine SIM-Karte zur Verfügung gestellt wird, werden diese Teilnehmerberechtigungsdaten üblicherweise vom SIM-Karten-Hersteller oder dem Netzbetreiber im Rahmen eines Personalisierungsprozesses als Teil eines Teilnehmerprofils (auch als Subskriptionsprofil oder kurz Subskription genannt) auf der SIM-Karte sicher hinterlegt. Eine nichtpersonalisierte SIM-Karte ist im Allgemeinen nicht für die bestimmungsgemäße Verwendung in einem Kommunikationsgerät geeignet, d.h. es ist nicht möglich mit einer nicht-personalisierten SIM-Karte ohne ein Teilnehmerprofil auf ein Mobilfunknetzwerk zuzugreifen und zu kommunizieren.

Aus dem Stand der Technik sind insbesondere für Teilnehmeridentitätsmodule, die fest in einem Kommunikationsgerät eingebettet sind, Verfahren zum Bereitstellen eines Teilnehmerprofils auf einem Kommunikationsgerät über ein Mobilfunknetzwerk bekannt.

Hierbei sind Verfahren bekannt, bei denen bei der Auslieferung eines Kommunikationsgeräts ein Initialisierungsprofil auf dem Teilnehmeridentitätsmodul des Kommunikationsgeräts hinterlegt ist. Dabei ist ein solches Initialisierungsprofil ausgebildet, bei einem erstmaligen Verbinden mit einem Discovery-Server oder beim erstmaligen Einbuchen in ein entsprechendes Mobilfunknetzwerk das Bereitstellen eines vollständigen Teilnehmerprofils auf dem Teilnehmeridentitätsmodul des Kommunikationsgeräts zu veranlassen, wobei das vollständige Teilnehmerprofil für zukünftige Zugriffe auf das Mobilfunknetzwerk in der Regel eine eindeutige Teilnehmerkennung, insbesondere eine eindeutige IMSI aufweist.

Sowohl bei Kommunikationsgeräten mit Teilnehmeridentitätsmodulen in Form von klassischen SIM-Karten als auch bei Kommunikationsgeräten mit eingebetteten Teilnehmeridentitätsmodulen besteht das Problem, dass ein solches Kommunikationsgerät dem Eigentümer abhandenkommen kann, beispielsweise weil der Eigentümer sein Kommunikationsgerät verliert oder verlegt oder weil das Kommunikationsgerät dem Eigentümer entwendet wird.

US 2005/280557 A1 beschreibt ein "klassisches" Mobilfunknetzwerk mit einem Ortungsdienst zum Orten von gestohlenen Mobilfunkendgeräten, deren IMEIs in einer Blacklist eines EIR enthalten sind. Nachdem die Position eines gestohlenen Mobilfunkendgeräts mittels dieses Ortungsdienstes ermittelt worden ist, können die entsprechenden Positionsinformationen an einen Nutzer dieses Dienstes, beispielsweise eine polizeiliche Behörde, weitergeleitet werden.

EP 2 975 872 A1 beschreibt ein Subskriptionsmanagementsystem zum Bereitstellen eines Kommunikationsprofils auf einer embedded SIM eines Mobilfunkendgeräts. Das Kommunikationsprofil wird von einem Profilserver in eine Vielzahl von Paketen unterteilt, aus denen ein Prozessor des Mobilfunkendgeräts ein "Image File" erzeugt.

Bei der Druckschrift Ngmn Alliance: "NGMN 5G P1 Requirements & Architecture Work Stream End-to-End Architecture Description of Network Slicing Concept Document Type: Final Deliverable (approved) Confidentiality Class: P-Public Authorised Recipients" vom 13. Januar 2016 handelt es sich um das bekannte "NGMN 5G White Paper".

### ZUSAMMENFASSUNG DER ERFINDUNG

Vor diesem Hintergrund stellt sich der vorliegenden Erfindung die Aufgabe, ein verbessertes Konzept dafür bereitzustellen, wie ein Mobilfunknetzwerk auf das Abhandenkommen eines Kommunikationsgeräts reagieren kann.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Vorrichtungen, Systeme und Verfahren können auf verschiedene Arten und Weisen implementiert sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Vorrichtungen, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen eines Mobilfunknetzes oder eines Festnetzes stattfinden, sowie das Zugangsnetz, in dem die Übertragung der Signale zwischen einer Netzwerkzugangseinrichtung und dem Kommunikationsgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

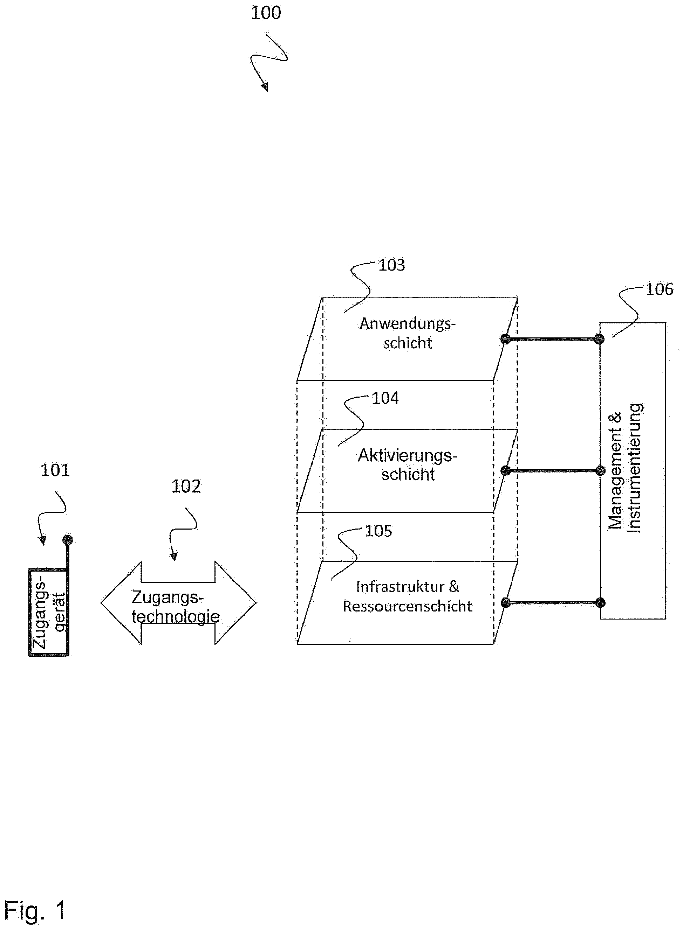

Die im Folgenden vorgestellten Vorrichtungen, Systeme und Verfahren sind dazu vorgesehen, die Kommunikation in Kommunikationsnetzen zu steigern, insbesondere in Kommunikationsnetzen gemäß der im Folgenden vorgestellten 5G-Systemarchitektur. Figur 1 zeigt eine schematische Darstellung einer solchen 5G-Systemarchitektur 100. Die 5G-Systemarchitektur 100 umfasst einen Bereich mit 5G-Kommunikationsgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs- und Speicherknoten), 5G-Geräten wie z.B. Mobiltelefonen, tragbaren Geräten, Maschinenkommunikationsmodulen und dergleichen. 5G-Geräte können vielfältige und konfigurierbare Fähigkeiten aufweisen und beispielsweise als Relay oder Hub agieren oder abhängig von dem jeweiligen Kontext als Computer/Speicher-Ressource arbeiten. Diese Ressourcen werden den höheren Schichten 104, 103 und der Management- & Instrumentierungsebene 106 über entsprechende APIs (Anwendungsprogrammier-Schnittstellen) zur Verfügung gestellt. Das Überwachen der Leistungsfähigkeit und der Konfigurationen können inhärenter Teil solcher APIs sein.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, sowie einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden, und zwar durch Nutzung der dafür vorgesehenen APIs. Für bestimmte Funktionen können mehrfache Varianten existieren, z.B. verschiedene Implementierungen derselben Funktionalität, welche unterschiedliche Leistungsfähigkeiten oder Charakteristiken haben. Die verschiedenen Grade der Leistungsfähigkeit und der angebotenen Fähigkeiten können dazu verwendet werden, um die Netzwerkfunktionalitäten wesentlich weiter zu unterscheiden, als es in heutigen Netzen möglich ist, beispielsweise als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, von Unternehmen, vertikalen Operatoren oder von Drittparteien, die das 5G-Netzwerk nutzen. Die Schnittstelle zu der Management- & Instrumentierungsebene 106 erlaubt zum Beispiel, bestimmte, d.h. dedizierte logische Subnetzwerke (nachstehend auch als Netzwerk-Slices bezeichnet) für eine Anwendung aufzubauen, oder eine Anwendung einer existierenden Netzwerk-Slice zuzuweisen.

Die Management- & Instrumentierungsebene 106 ist der Kontaktpunkt, um die geforderten Anwendungsfälle in tatsächliche Netzwerkfunktionen und Slices umzusetzen. Sie definiert die Netzwerk-Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet ferner sowohl die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk-Slices zu erzeugen und zu verwalten. Aufgrund der vielzähligen Aufgaben der Management- & Instrumentierungsebene 106 handelt es sich dabei in der Regel nicht um einen monolithischen Block von Funktionalität, sondern vielmehr um eine Sammlung modularer Funktionen, die Fortschritte integrieren, die in verschiedenen Netzwerkdomänen erzielt werden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und Dienstbereitstellung zu optimieren.

Die hier vorgestellten Vorrichtungen, Systeme und Verfahren sind dazu vorgesehen, die Kommunikation in Kommunikationsnetzen zu verbessern, insbesondere in 5G-Kommunikationsnetzen mit mehreren logischen Subnetzwerken bzw. Netzwerk-Slices, wie im Folgenden beschrieben.

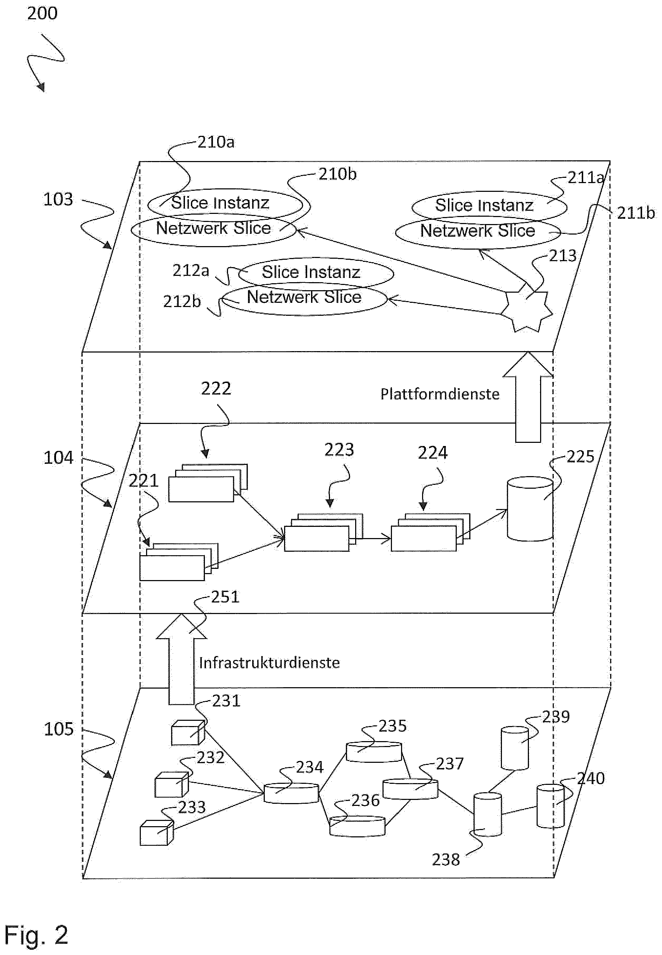

Figur 2 zeigt eine schematische Darstellung eines 5G-Kommunikationsnetzwerks 200 mit mehreren logischen Subnetzwerken bzw. Netzwerk-Slices. Das 5G-Kommunikationsnetzwerk 200 umfasst eine Infrastruktur- & Ressourcenschicht 105, eine Aktivierungsschicht 104 und eine Anwendungsschicht 103.

Die Infrastruktur- & Ressourcenschicht 105 umfasst die gesamte physikalische Infrastruktur, die einem Netzwerkbetreiber zugeordnet ist, d.h. Standorte, Kabel, Netzwerkknoten und dergleichen. Diese Schicht 105 bildet die Grundlage für alle Netzwerk-Slices. Sie ist so generisch wie möglich aufgebaut, um die Zahl der spezialisierten physikalischen Einheiten auf ein Mindestmaß zu beschränken. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von (z.B. nicht-physikalischen) Softwareobjekten hinzu, um das Erzeugen von jeder Art von Netzwerk-Slices zu ermöglichen und so eine Plattform als Dienst der nächsthöheren Schicht 103 bereitzustellen.

Softwareobjekte können in jeder Granularität vorliegen, und ein winziges oder ein sehr großes Fragment einer Netzwerk-Slice umfassen. Um die Erzeugung von Netzwerk-Slices auf einem geeigneten Abstraktionslevel zu erlauben, können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekte 224 überführt werden können und in einer Objektbibliothek 225 der nächsthöheren Ebene zur Verfügung gestellt werden. Damit kann die Komplexität hinter den Netzwerk-Slices verborgen werden. Beispielsweise kann ein Nutzer bzw. Kunde eine mobile Breitband-Slice erzeugen und dabei lediglich KPIs (Key Performance Indikatoren) definieren, ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einer Netzwerk-Slice unterstützt, z.B. durch Verwendung von SFC ("Service Function Chaining" = Dienstfunktionenverkettung) oder modifizierender Software, so dass die Funktionalität einer Slice vollständig vordefiniert werden kann und sowohl näherungsweise statische Softwaremodule als auch dynamisch hinzufügbare Softwaremodule umfassen kann.

Eine Netzwerk-Slice kann dabei als software-definierte Entität betrachtet werden, die auf einem Satz von Objekten basiert, welche ein vollständiges Netzwerk definieren. Die Aktivierungsschicht 104 spielt für dieses Konzept eine Schlüsselrolle, da sie alle Softwareobjekte umfassen kann, die notwendig sind, um die Netzwerk-Slice und die entsprechenden Fertigkeiten zum Handhaben der Objekte bereitzustellen. Die Aktivierungsschicht 104 kann als eine Art von Netzwerk-Betriebssystem betrachtet werden, komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk-Slices auszugestalten, während der Plattform-Betreiber immer noch die physikalischen Knoten instand halten und optimieren kann. So wird beispielsweise die Ausführung der alltäglichen Aufgaben wie das Hinzufügen oder Ersetzen von eNodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln einer Netzwerk-Slice-Umgebung.

Eine Netzwerk-Slice, auch als 5G-Slice bezeichnet, unterstützt die Kommunikationsdienste eines bestimmten Verbindungstyps mit einer bestimmten Art der Handhabung der C- (Control bzw. Steuerungs-) und U-(User Data bzw. Nutzerdaten) Schicht, auch als "Control Plane" und "User Plane" bezeichnet. Eine 5G-Slice setzt sich zusammen aus einer Sammlung von verschiedenen 5G-Netzwerkfunktionen und spezifischen Funkzugangstechnologie-Einstellungen (RAT = radio access technology), die für den spezifischen Anwendungsfall miteinander kombiniert werden. Daher kann eine 5G-Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie sowie eine Konfiguration der 5G-Geräte. Nicht alle Slices enthalten dieselben Funktionen, einige Funktionen, die heute für ein mobiles Netzwerk als wesentlich erscheinen, können sogar in einigen Slices nicht vorkommen. Die Intention einer 5G-Slice ist es, nur die Funktionen bereitzustellen, die für den spezifischen Anwendungsfall notwendig sind, und alle anderen unnötigen Funktionalitäten zu vermeiden. Die Flexibilität hinter dem Slice-Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte von Slices über geeignete APIs zu steuern, um so maßgeschneiderte Dienste bereitstellen zu können.

Die Anwendungsschicht 103 umfasst alle erzeugten Netzwerk-Slices 210b, 211b, 212b und bietet diese als "Netzwerk als Service" verschiedenen Netzwerknutzern, z.B. verschiedenen Teilnehmern an. Das Konzept erlaubt die Wiederbenutzung von definierten Netzwerk-Slices 210b, 211b, 212b für verschiedene Anwender, beispielsweise als eine neue Netzwerk-Slice-Instanz 210a, 211a, 212a. Beispielsweise kann eine Netzwerk-Slice 210b, 211b, 212b, welche beispielsweise einer Automotive-Anwendung zugeordnet ist, auch für verschiedene andere industrielle Anwendungen genutzt werden. Die Slice-Instanzen 210a, 211a, 212a, die von einem ersten Anwender erzeugt wurden, können beispielsweise unabhängig von den Slice-Instanzen sein, die von einem zweiten Anwender erzeugt wurden, und das obwohl die gesamte Netzwerk-Slice-Funktionalität dieselbe sein kann.

Vor diesem Hintergrund betrifft die Erfindung gemäß einem ersten Aspekt ein Verfahren zum Betreiben eines 5G-Mobilfunknetzwerks mit mehreren Netzwerk-Slices gemäß Anspruch 1, wobei das Verfahren die folgenden Schritte umfasst: ein Kommunikationsgerät einem ersten Subnetzwerk des Mobilfunknetzwerks zuzuweisen, wobei das Kommunikationsgerät ein Kommunikationsprofil zum Aufbau einer Kommunikationsverbindung zu dem Mobilfunknetzwerk umfasst und wobei das erste Subnetzwerk als erste Netzwerk-Slice des Mobilfunknetzwerks ausgebildet ist; und ansprechend auf eine Meldung, dass das Kommunikationsgerät abhandengekommen ist bzw. vermisst wird, das Kommunikationsgerät einem zweiten Subnetzwerk des Mobilfunknetzwerks zuzuweisen, wobei das zweite Subnetzwerk als zweite Netzwerk-Slice des Mobilfunknetzwerks ausgebildet ist.

Gemäß einer Ausführungsform ist das erste Subnetzwerk ausgebildet, dem Kommunikationsgerät einen ersten Satz von Diensten des Mobilfunknetzwerks bereitzustellen, und das zweite Subnetzwerk ausgebildet, dem Kommunikationsgerät einen zweiten Satz von Diensten des Mobilfunknetzwerks bereitzustellen, wobei der erste Satz von Diensten und der zweite Satz von Diensten unterschiedliche Dienste des Mobilfunknetzwerks umfassen.

Gemäß einer Ausführungsform ist das erste Subnetzwerk ausgebildet, dem Kommunikationsgerät die Kommunikation mit anderen Kommunikationsgeräten über das Mobilfunknetz zu ermöglichen.

Gemäß einer Ausführungsform handelt es sich bei dem Kommunikationsprofil des Kommunikationsgeräts, das beispielsweise auf einem Teilnehmeridentitätsmodul des Kommunikationsgeräts hinterlegt sein kann, um ein Initialisierungsprofil (auch als Bootstrap-Profil bekannt), wobei das erste Subnetzwerk ausgebildet ist, beim Zugriff des Kommunikationsgeräts mittels des Initialisierungsprofils auf das Mobilfunknetzwerk ein vollständiges Teilnehmerprofil auf dem Kommunikationsgerät bereitzustellen, wobei das Teilnehmerprofil eine eindeutige Teilnehmerkennung, insbesondere eine eindeutige IMSI, umfasst.

Gemäß einer Ausführungsform handelt es sich bei dem Kommunikationsprofil des Kommunikationsgeräts, das beispielsweise auf einem Teilnehmeridentitätsmodul des Kommunikationsgeräts hinterlegt sein kann, um ein Initialisierungsprofil, wobei das zweite Subnetzwerk ausgebildet ist, beim Zugriff des Kommunikationsgeräts mittels des Initialisierungsprofils auf das Mobilfunknetzwerk einen oder mehrere der folgenden Schritte durchzuführen: Sperren des Kommunikationsgeräts; Entfernen des Initialisierungsprofils auf dem Kommunikationsgerät; Informieren des Eigentümers oder des Herstellers des Kommunikationsgeräts, dass mit dem abhandengekommenen Kommunikationsgerät auf das Mobilfunknetzwerk zugegriffen worden ist; Anzeigen einer Rufnummer des Eigentümers des Kommunikationsgeräts auf dem Kommunikationsgerät; Aufbauen einer Kommunikationsverbindung zu einer Rufnummer des Eigentümers des Kommunikationsgeräts.

Gemäß einer Ausführungsform sind das erste Subnetzwerk und das zweite Subnetzwerk logisch voneinander entkoppelt.

Wie oben beschrieben, sind das erste Subnetzwerk und das zweite Subnetzwerk als Netzwerk-Slices des Mobilfunknetzwerkes ausgebildet.

Gemäß einem zweiten Aspekt betrifft die Erfindung eine Netzwerkmanagemententität gemäss Anspruch 7 für ein 5G-Mobilfunknetzwerk mit mehreren Netzwerk-Slices, wobei die Netzwerkmanagemententität ausgebildet ist: ein Kommunikationsgerät einem ersten Subnetzwerk des Mobilfunknetzwerks zuzuweisen, wobei das Kommunikationsgerät ein Kommunikationsprofil zum Aufbau einer Kommunikationsverbindung zu dem Mobilfunknetzwerk umfasst und wobei das erste Subnetzwerk als erste Netzwerk-Slice des Mobilfunknetzwerks ausgebildet ist; und ansprechend auf eine Meldung, dass das Kommunikationsgerät abhandengekommen ist, das Kommunikationsgerät einem zweiten Subnetzwerk des Mobilfunknetzwerks zuzuweisen, wobei das zweite Subnetzwerk als zweite Netzwerk-Slice des Mobilfunknetzwerks ausgebildet ist. Die Netzwerkmanagemententität kann ferner ausgebildet sein, das erste Subnetzwerk und das zweite Subnetzwerk des Mobilfunknetzwerks bereitzustellen und/oder zu betreiben.

Gemäß einer Ausführungsform ist das erste Subnetzwerk ausgebildet, dem Kommunikationsgerät einen ersten Satz von Diensten des Mobilfunknetzwerks bereitzustellen, und das zweite Subnetzwerk ausgebildet, dem Kommunikationsgerät einen zweiten Satz von Diensten des Mobilfunknetzwerks bereitzustellen, wobei der erste Satz von Diensten und der zweite Satz von Diensten unterschiedliche Dienste des Mobilfunknetzwerks umfassen.

Gemäß einer Ausführungsform ist das erste Subnetzwerk ausgebildet, dem Kommunikationsgerät die Kommunikation mit anderen Kommunikationsgeräten über das Mobilfunknetz zu ermöglichen.

Gemäß einer Ausführungsform ist das Kommunikationsprofil ein Initialisierungsprofil (auch als Bootstrap-Profil bekannt), wobei das erste Subnetzwerk ausgebildet ist, beim Zugriff des Kommunikationsgeräts mittels des Initialisierungsprofils auf das Mobilfunknetzwerk ein Teilnehmerprofil auf dem Kommunikationsgerät bereitzustellen, wobei das Teilnehmerprofil eine eindeutige Teilnehmerkennung, insbesondere eine eindeutige IMSI, umfasst.

Gemäß einer Ausführungsform ist das Kommunikationsprofil ein Initialisierungsprofil, wobei das zweite Subnetzwerk ausgebildet ist, beim Zugriff des Kommunikationsgeräts mittels des Initialisierungsprofils auf das Mobilfunknetzwerk eine oder mehrere der folgenden Aktionen durchzuführen: Sperren des Kommunikationsgeräts; Entfernen des Initialisierungsprofils auf dem Kommunikationsgerät; Informieren des Eigentümers oder des Herstellers des Kommunikationsgeräts, dass mit dem abhandengekommenen Kommunikationsgerät auf das Mobilfunknetzwerk zugegriffen worden ist; Anzeigen einer Rufnummer des Eigentümers des Kommunikationsgeräts auf dem Kommunikationsgerät; Aufbauen einer Kommunikationsverbindung zu einer Rufnummer des Eigentümers des Kommunikationsgeräts.

Gemäß einer Ausführungsform sind das erste Subnetzwerk und das zweite Subnetzwerk logisch voneinander entkoppelt.

Wie oben beschrieben, sind das erste Subnetzwerk und das zweite Subnetzwerk als Netzwerk-Slices des Mobilfunknetzwerkes ausgebildet.

Gemäß einer Ausführungsform handelt es sich bei der Netzwerkmanagemententität um einen SDN-Orchestrator und/oder einen SDN-Controller.

Die Erfindung kann in Hardware und/oder in Software realisiert werden.

### KURZE BESCHREIBUNG DER FIGUREN

Weitere Ausführungsbeispiele werden Bezug nehmend auf die beiliegenden Zeichnungen erläutert. Es zeigen:
Fig. 1 eine schematische Darstellung der Architektur eines 5G-Kommunikationsnetzwerkes;
Fig. 2 eine schematische Darstellung eines 5G-Kommunikationsnetzwerks mit mehreren Netzwerk-Slices;
Fig. 3 eine schematische Darstellung eines Kommunikationssystems mit einem Kommunikationsgerät und einem Mobilfunknetzwerk mit einer Netzwerkmanagemententität gemäß einer Ausführungsform;
Fig. 4 eine schematische Darstellung eines Kommunikationssystems mit einem Kommunikationsgerät und Komponenten eines Mobilfunknetzwerks gemäß einer Ausführungsform; und
Fig. 5 ein Ablaufdiagramm eines Verfahrens zum Betreiben eines Mobilfunknetzwerks gemäß einer Ausführungsform.

### DETAILIERTE BESCHREIBUNG

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

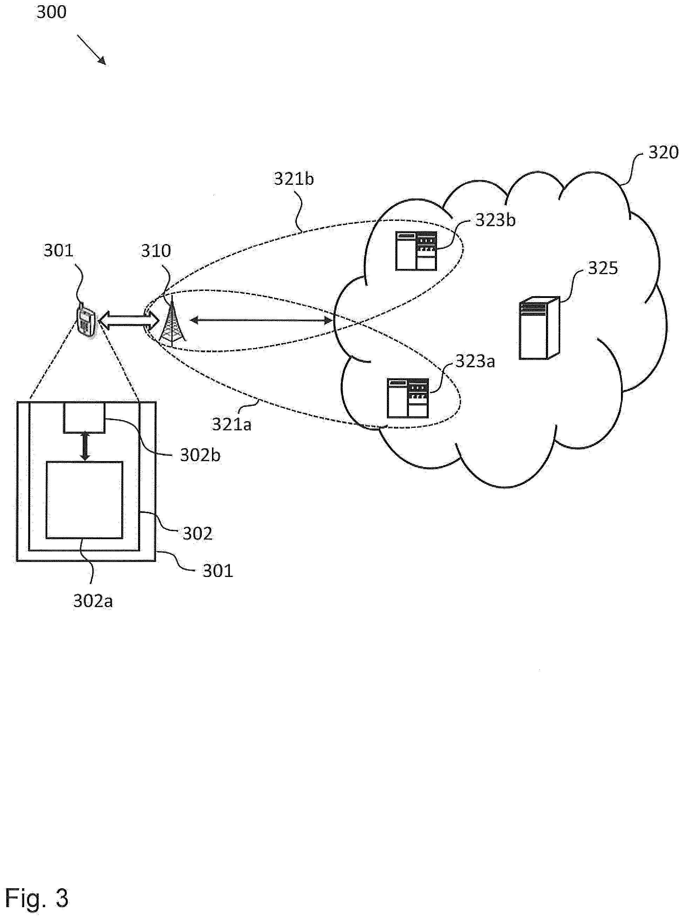

Figur 3 zeigt eine schematische Darstellung eines Kommunikationssystems 300 mit einem Kommunikationsgerät 301 und einem Mobilfunknetzwerk 320. Das Kommunikationsgerät 301 ist dazu ausgebildet, über eine Basisstation 310 mit dem Mobilfunknetzwerk 320 zu kommunizieren bzw. auf das Mobilfunknetzwerk 320 zuzugreifen. Das Mobilfunknetzwerk 320 kann als 5G-Kommunikationsnetzwerk ausgebildet sein oder Teil eines 5G-Kommunikationsnetzwerks sein, welches beispielsweise ferner ein Festnetz umfasst. Die Basisstation 310 kann beispielsweise als Mobilfunkbasisstation oder als WLAN-Basisstation ausgebildet sein.

Bei dem Kommunikationsgerät 301 kann es sich beispielsweise um ein Mobiltelefon handeln. Das Kommunikationsgerät 301 kann jedoch ebenso beispielsweise ein Tablett-Computer, ein Notebook, ein TV-System, eine Set-Top-Box, ein Verkaufsautomat, ein Kraftfahrzeug, eine Überwachungskamera, eine Sensorvorrichtung oder eine andere Vorrichtung sein, die dazu ausgebildet ist, über das Mobilfunknetzwerk 320 zu kommunizieren.

Wie sich der vergrößerten Darstellung in Figur 3 entnehmen lässt, kann das Kommunikationsgerät 301 ein Teilnehmeridentitätsmodul 302 umfassen. Das Teilnehmeridentitätsmodul 302 kann beispielsweise als eine eUICC (embedded Universal Integrated Circuit Card) mit einer darauf implementierten SIM-Applikation ausgestaltet sein, d.h. als fester Bestandteil des Kommunikationsgeräts 301. Alternativ kann das Teilnehmeridentitätsmodul 302 beispielsweise als eine austauschbare UICC (Universal Integrated Circuit Card) oder austauschbare SIM-Karte (Subscriber Identity Module) ausgestaltet sein. Das Teilnehmeridentitätsmodul 302 kann einen Speicher 302a und eine Kommunikationsschnittstelle 302b umfassen. In einer Ausführungsform kann das Teilnehmeridentitätsmodul 302 ferner einen Prozessor (nicht in Figur 1 dargestellt) umfassen, um beispielsweise Daten aus dem Speicher 302a auszulesen und über die Kommunikationsschnittstelle 302b an das Kommunikationsgerät 301 auszugeben.

In dem Speicher 302a des Teilnehmeridentitätsmoduls 302 kann ein Kommunikationsprofil hinterlegt sein, mittels dem das Kommunikationsgerät 301 eine Kommunikationsverbindung zu dem Mobilfunknetzwerk 320 aufbauen kann und auf Dienste des Mobilfunknetzwerks zugreifen kann.

Wie in Figur 3 schematisch angedeutet, ist erfindungsgemäß vorgesehen, dass in dem Mobilfunknetzwerk 320 ein erstes logisches Subnetzwerk 321a, insbesondere eine erste Netzwerk-Slice 321a, und ein zweites logisches Subnetzwerk 321b betrieben werden. Diese Netzwerk-Slices 321a, 321b können auf physikalischer Infrastruktur des Mobilfunknetzwerks 320, beispielsweise auf jeweiligen Servern 323a, 323b instanziiert sein.

Wie bereits vorstehend beschrieben, betrifft der Begriff "Netzwerk-Slice" bzw. "Netzwerk-Slicing" ein Konzept zum Betreiben mehrerer logische Netzwerke als virtuell unabhängige, d.h. logisch entkoppelte, Einheiten auf einer gemeinsamen physikalischen Netzwerk-Infrastruktur. In diesem Sinne stellt ein Netzwerk-Slice ein unabhängiges virtuelles Endezu-Ende-Netzwerk dar, das sich aus Anwendersicht auf dieselbe Art und Weise verhält wie ein physikalisches Netzwerk, einschließlich einer Business-Logik und Netzwerkmanagementfähigkeiten. Für weitere Details zu Netzwerk-Slices im Sinne der vorlegenden Erfindung wird auf "NGMN 5G White Paper" und insbesondere auf den Abschnitt 5.4 davon verwiesen, das auf der Webseite der "NGMN Alliance" unter der URL "https://www,ngmn.org/home,html" abgerufen werden kann und auf das hiermit vollumfänglich Bezug genommen wird.

Die in Figur 3 dargestellten Netzwerk-Slices 321a, 32b des Mobilfunknetzwerks 320 können insbesondere von einer Netzwerkmanagemententität 325 des Mobilfunknetzwerks 320 bereitgestellt, d.h. instanziiert, betrieben und verwaltet werden. Bei der Netzwerkmanagemententität 325 kann es sich um einen SDN-Orchestrator und/oder einen SDN-Controller des Mobilfunknetzwerks 320 handeln, wobei die Abkürzung "SDN" für "software defined networking" steht. Ein SDN-Controller 327 ist insbesondere dazu ausgebildet, unter Verwendung von Switches den Datenfluss in den Netzwerk-Slices 321 a und 321b zu regeln.

Erfindungsgemäß ist die Netzwerkmanagemententität 325 ausgebildet: in einer Art Normal-Modus das Kommunikationsgerät 301 der ersten Netzwerk-Slice 321a des Mobilfunknetzwerks 320 zuzuweisen, so dass beim Aufbau einer Kommunikationsverbindung zu dem Mobilfunknetzwerk 320 das Kommunikationsgerät 301 mit der ersten Netzwerk-Slice 321a kommuniziert. In diesem Normal-Modus stellt die erste Netzwerk-Slice 321a quasi das Mobilfunknetzwerk dar, welches das Kommunikationsgerät 301 "sieht".

Erfindungsgemäß ist nun weiter vorgesehen, dass für den Fall, dass das Kommunikationsgerät 301 dem Eigentümer abhandenkommt, beispielsweise verloren geht oder dem Eigentümer entwendet wird, der Eigentümer beispielsweise den Betreiber des Mobilfunknetzwerks 320 über ein Webportal oder telefonisch darüber informiert, und dadurch die Netzwerkmanagemententität 325 dazu veranlasst wird, das Kommunikationsgerät 301 der zweiten Netzwerk-Slice 321b des Mobilfunknetzwerks 320 zuzuweisen. Somit kommuniziert in diesem Fall das Kommunikationsgerät 301 beim Aufbau einer Kommunikationsverbindung zu dem Mobilfunknetzwerk 320 nicht wie im Normal-Modus mit der ersten Netzwerk-Slice 321a, sondern mit der zweiten Netzwerk-Slice 321b, die sozusagen für abhandengekommene Kommunikationsgeräte zuständig ist.

Das Zuweisen des Kommunikationsgeräts 301 der zweiten Netzwerk-Slice 321b des Mobilfunknetzwerks 320 kann beispielsweise dadurch erfolgen, dass die Netzwerkmanagemententität 325 im Zusammenhang mit einer in einer Datenbank des Mobilfunknetzwerk 320 hinterlegten Teilnehmerkennung einen entsprechenden Statusindikator setzt oder ändert.

Gemäß einer Ausführungsform ist die erste Netzwerk-Slice 321a ausgebildet, dem Kommunikationsgerät 301 einen ersten Satz von Diensten des Mobilfunknetzwerks 320 bereitzustellen, und die zweite Netzwerk-Slice 321b ist ausgebildet, dem Kommunikationsgerät 301 einen zweiten Satz von Diensten des Mobilfunknetzwerks 320 bereitzustellen, wobei der erste Satz von Diensten und der zweite Satz von Diensten unterschiedliche Dienste des Mobilfunknetzwerks 320 umfassen.

Beispielsweise kann die erste Netzwerk-Slice 321a ausgebildet sein, dem Kommunikationsgerät die Kommunikation mit anderen Kommunikationsgeräten über das Mobilfunknetz zu ermöglichen. Gemäß einer Ausführungsform wird dieser Telefonie-Dienst nicht von der zweiten Netzwerk-Slice 321b bereitgestellt.

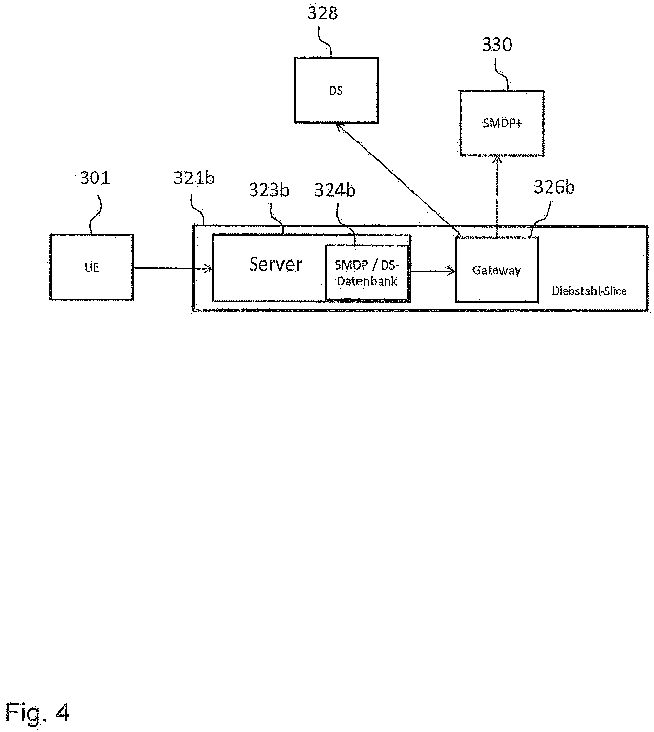

Gemäß einer Ausführungsform handelt es sich bei dem Kommunikationsprofil des Kommunikationsgeräts 301, das insbesondere auf dem Teilnehmeridentitätsmodul 302 des Kommunikationsgeräts 301 hinterlegt sein kann, um ein Initialisierungsprofil (auch als Bootstrap-Profil bekannt). Erfolgt ein erstmaliges Verbinden des Kommunikationsgeräts 301 auf der Grundlage des Initialisierungsprofils mit einem Discovery-Server, beispielsweise dem in Figur 4 dargestellten Discovery-Server 328, oder ein erstmaliges Einbuchen in das Mobilfunknetzwerk 320 im oben beschriebenen Normal-Modus, d.h. über die Netzwerk-Slice 321a, wird gemäß einer Ausführungsform hierdurch das Bereitstellen eines vollständigen Teilnehmerprofils auf dem Teilnehmeridentitätsmodul 302 des Kommunikationsgeräts 301 angestoßen. Dabei kann das vollständige Teilnehmerprofil für zukünftige Zugriffe auf das Mobilfunknetzwerk 320 eine eindeutige Teilnehmerkennung, insbesondere eine eindeutige IMSI umfassen. Ein solches vollständiges Teilnehmerprofil kann beispielsweise von einem Profilserver bereitgestellt werden. In Figur 4 ist ein solcher Profilserver in Form eines SMDP+-Servers 330 dargestellt, wobei die Abkürzung SMDP für "Subscription Management Data Preparation" steht.

Für den Fall, dass das erstmalige Einbuchen des Kommunikationsgeräts 301 mit einem Initialisierungsprofil in dem Modus erfolgt, in dem das Kommunikationsgerät 301 als abhandengekommen gemeldet ist, ist das Kommunikationsgerät 301 der zweiten Netzwerk-Slice 321b zugewiesen, welche ansprechend auf auf die Anfrage des Kommunikationsgeräts 301 nach einem vollständigen Teilnehmerprofil eine oder mehrere der folgenden Reaktionen veranlassen kann: Sperren des Kommunikationsgeräts 301; Entfernen des Initialisierungsprofils auf dem Kommunikationsgerät 301; Informieren des Eigentümers oder des Herstellers des Kommunikationsgeräts 301, dass mit dem abhandengekommenen Kommunikationsgerät auf das Mobilfunknetzwerk 320 zugegriffen worden ist; Anzeigen einer Rufnummer des Eigentümers des Kommunikationsgeräts 301 auf dem Kommunikationsgerät 301; Aufbauen einer Kommunikationsverbindung zu einer Rufnummer des Eigentümers des Kommunikationsgeräts 301.

Figur 4 zeigt eine Ausführungsform zu dem vorstehend beschriebenen Fall, dass das erstmalige Einbuchen des Kommunikationsgeräts 301 mit einem Initialisierungsprofil in dem Modus erfolgt, in dem das Kommunikationsgerät 301 als abhandengekommen gemeldet ist. Bei der in Figur 4 dargestellten Ausführungsform umfasst die zweite Netzwerk-Slice 321b den Server 323b, der eine Datenbank 324b aufweist, sowie ein Gateway 326b, das dazu ausgebildet ist, mit dem Discovery-Server 382 und dem Profilserver 330 zu kommunizieren. In der Datenbank 324b können Informationen über zur Verfügung stehende Discovery-Server und/oder Profilserver vorgehalten werden. Die zweite Netzwerk-Slice 321b kann durch einen eigenen URI (Universal Ressource Identifier) identifiziert werden.

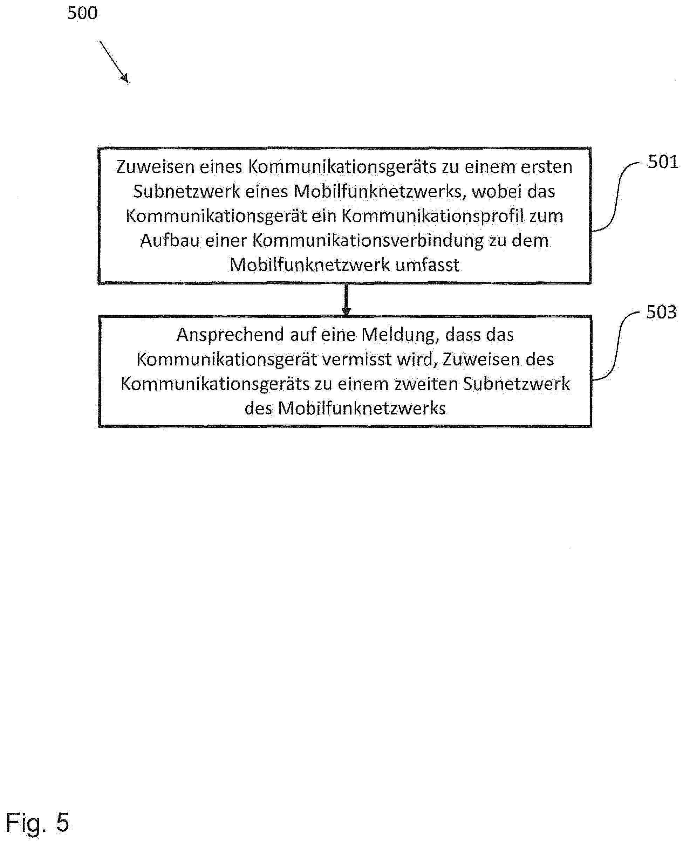

Figur 5 zeigt ein Ablaufdiagramm eines entsprechenden Verfahrens 500 zum Betreiben des Mobilfunknetzwerks 120 gemäß einer Ausführungsform. Das Verfahren 500 umfasst einen Schritt 501, das Kommunikationsgeräts 301 dem ersten Subnetzwerk 321a des Mobilfunknetzwerks 320 zuzuweisen, wobei das Kommunikationsgerät 301 ein Kommunikationsprofil zum Aufbau einer Kommunikationsverbindung zu dem Mobilfunknetzwerk 320 umfasst. Das Verfahren 500 umfasst einen weiteren Schritt 503, ansprechend auf eine Meldung, dass das Kommunikationsgerät 301 abhandengekommen ist, das Kommunikationsgerät einem zweiten Subnetzwerk 321 b des Mobilfunknetzwerks 320 zuzuweisen.

## Patentansprüche

1. Verfahren (500)
zum Betreiben eines 5G-Mobilfunknetzwerks (320) mit mehreren
Netzwerk-Slices, wobei das Verfahren (500) umfasst:
Zuweisen (501) eines Kommunikationsgeräts (301) zu einem ersten Subnetzwerk (321a) des Mobilfunknetzwerks (320), wobei das Kommunikationsgerät (301) ein Kommunikationsprofil zum Aufbau einer Kommunikationsverbindung zu dem Mobilfunknetzwerk (320) umfasst und wobei das erste Subnetzwerk (321a) als erste Netzwerk-Slice (321a) des Mobilfunknetzwerks (320) ausgebildet ist; und
ansprechend auf eine Meldung, dass das Kommunikationsgerät (301) abhandengekommen ist, Zuweisen (503) des Kommunikationsgeräts (301) zu einem zweiten Subnetzwerk (321b) des Mobilfunknetzwerks (320), wobei das zweite Subnetzwerk (321b) als zweite Netzwerk-Slice (321b) des Mobilfunknetzwerks (320) ausgebildet ist.

2. Verfahren (500) nach Anspruch 1, wobei das erste Subnetzwerk (321a) ausgebildet ist, dem Kommunikationsgerät (301) einen ersten Satz von Diensten des Mobilfunknetzwerks (320) bereitzustellen, und das zweite Subnetzwerk (321b) ausgebildet ist, dem Kommunikationsgerät (301) einen zweiten Satz von Diensten des Mobilfunknetzwerks (320) bereitzustellen, wobei der erste Satz von Diensten und der zweite Satz von Diensten unterschiedliche Dienste des Mobilfunknetzwerks (320) umfassen.

3. Verfahren (500) nach Anspruch 1 oder 2, wobei das erste Subnetzwerk (321a) ausgebildet ist, dem Kommunikationsgerät (301) die Kommunikation mit anderen Kommunikationsgeräten über das Mobilfunknetz (320) zu ermöglichen.

4. Verfahren (500) nach einem der vorstehenden Ansprüche, wobei das Kommunikationsprofil ein Initialisierungsprofil ist und wobei das erste Subnetzwerk (321a) ausgebildet ist, beim Zugriff des Kommunikationsgeräts (301) mittels des Initialisierungsprofils auf das Mobilfunknetzwerk (320) ein Teilnehmerprofil auf dem Kommunikationsgerät (301) bereitzustellen, wobei das Teilnehmerprofil eine eindeutige Teilnehmerkennung, insbesondere eine eindeutige IMSI, umfasst.

5. Verfahren (500) nach einem der vorstehenden Ansprüche, wobei das Kommunikationsprofil ein Initialisierungsprofil ist und wobei das zweite Subnetzwerk (321b) ausgebildet ist, beim Zugriff des Kommunikationsgeräts (301) mittels des Initialisierungsprofils auf das Mobilfunknetzwerk (320) einen oder mehrere der folgenden Schritte durchzuführen: Sperren des Kommunikationsgeräts (301); Entfernen des Initialisierungsprofils auf dem Kommunikationsgerät (301); Informieren des Eigentümers oder des Herstellers des Kommunikationsgeräts (301), dass mit dem abhandengekommenen Kommunikationsgerät auf das Mobilfunknetzwerk (320) zugegriffen worden ist; Anzeigen einer Rufnummer des Eigentümers des Kommunikationsgeräts (301) auf dem Kommunikationsgerät; Aufbauen einer Kommunikationsverbindung zu einer Rufnummer des Eigentümers des Kommunikationsgeräts (301).

6. Verfahren (500) nach einem der vorstehenden Ansprüche, wobei das erste Subnetzwerk (321a) und das zweite Subnetzwerk (321b) logisch voneinander entkoppelt sind.

7. Netzwerkmanagemententität (325) für ein 5G-Mobilfunknetzwerk (320) mit mehreren Netzwerk-Slices, wobei die Netzwerkmanagemententität (325) ausgebildet ist:
ein Kommunikationsgerät (301) einem ersten Subnetzwerk (321a) des Mobilfunknetzwerks (320) zuzuweisen, wobei das Kommunikationsgerät (301) ein Kommunikationsprofil zum Aufbau einer Kommunikationsverbindung zu dem Mobilfunknetzwerk (320) umfasst und wobei das erste Subnetzwerk (321a) als erste Netzwerk-Slice (321a) des Mobilfunknetzwerks (320) ausgebildet ist;
ansprechend auf eine Meldung, dass das Kommunikationsgerät (301) abhandengekommen ist, das Kommunikationsgerät (301) einem zweiten Subnetzwerk (321b) des Mobilfunknetzwerks (320) zuzuweisen, wobei das zweite Subnetzwerk (321b) als zweite Netzwerk-Slice (321b) des Mobilfunknetzwerks (320) ausgebildet ist.

8. Netzwerkmanagemententität (325) nach Anspruch 7, wobei das erste Subnetzwerk (321a) ausgebildet ist, dem Kommunikationsgerät (301) einen ersten Satz von Diensten des Mobilfunknetzwerks (320) bereitzustellen, und das zweite Subnetzwerk (321b) ausgebildet ist, dem Kommunikationsgerät (301) einen zweiten Satz von Diensten des Mobilfunknetzwerks (320) bereitzustellen, wobei der erste Satz von Diensten und der zweite Satz von Diensten unterschiedliche Dienste des Mobilfunknetzwerks (320) umfassen.

9. Netzwerkmanagemententität (325) nach Anspruch 7 oder 8, wobei das erste Subnetzwerk (321a) ausgebildet ist, dem Kommunikationsgerät (301) die Kommunikation mit anderen Kommunikationsgeräten über das Mobilfunknetz (320) zu ermöglichen.

10. Netzwerkmanagemententität (325) nach einem der Ansprüche 7 bis 9, wobei das Kommunikationsprofil ein Initialisierungsprofil ist und wobei das erste Subnetzwerk (321a) ausgebildet ist, beim Zugriff des Kommunikationsgeräts (301) mittels des Initialisierungsprofils auf das Mobilfunknetzwerk (320) ein Teilnehmerprofil auf dem Kommunikationsgerät (301) bereitzustellen, wobei das Teilnehmerprofil eine eindeutige Teilnehmerkennung, insbesondere eine eindeutige IMSI, umfasst.

11. Netzwerkmanagemententität (325) nach einem der Ansprüche 7 bis 10, wobei das Kommunikationsprofil ein Initialisierungsprofil ist und wobei das zweite Subnetzwerk (321b) ausgebildet ist, beim Zugriff des Kommunikationsgeräts (301) mittels des Initialisierungsprofils auf das Mobilfunknetzwerk (320) eine oder mehrere der folgenden Aktionen durchzuführen: Sperren des Kommunikationsgeräts (301); Entfernen des Initialisierungsprofils auf dem Kommunikationsgerät (301); Informieren des Eigentümers oder des Herstellers des Kommunikationsgeräts (301), dass mit dem abhandengekommenen Kommunikationsgerät auf das Mobilfunknetzwerk (320) zugegriffen worden ist; Anzeigen einer Rufnummer des Eigentümers des Kommunikationsgeräts (301) auf dem Kommunikationsgerät (301); Aufbauen einer Kommunikationsverbindung zu einer Rufnummer des Eigentümers des Kommunikationsgeräts (301).

12. Netzwerkmanagemententität (325) nach einem der Ansprüche 7 bis 11, wobei das erste Subnetzwerk (321a) und das zweite Subnetzwerk (321b) logisch voneinander entkoppelt sind.

13. Netzwerkmanagemententität (325) nach einem der Ansprüche 7 bis 12, wobei es sich bei der Netzwerkmanagemententität (325) um einen SDN-Orchestrator und/oder einen SDN-Controller handelt.

## Claims

1. A method (500) for operating a 5G mobile communications network (320) with a plurality of network slices, the method (500) comprising:
allocating (501) a communication device (301) to a first subnetwork (321a) of the mobile communications network (320), wherein the communication device (301) comprises a communication profile for establishing a communication connection to the mobile communications network (320) and wherein the first subnetwork (321a) is configured as first network slice (321a) of the mobile communications network (320); and
responsive to a notification that the communication device (301) got lost, allocating (503) the communication device (301) to a second subnetwork (321b) of the mobile communications network (320), wherein the second subnetwork (321b) is configured as second network slice (321b) of the mobile communications network (320).

2. The method (500) according to claim 1, wherein the first subnetwork (321a) is configured to provide the communication device (301) with a first set of services of the mobile communications network (320), and the second subnetwork (321b) is configured to provide the communication device (301) with a second set of services of the mobile communications network (320), wherein the first set of services and the second set of services comprise different services of the mobile communications network (320).

3. The method (500) according to claim 1 or 2, wherein the first subnetwork (321a) is configured to enable the communication device (301) to communicate with other communication devices via the mobile communications network (320).

4. The method (500) according to any one of the preceding claims, wherein the communication profile is an initializing profile and wherein the first subnetwork (321a) is configured to provide a subscriber profile on the communication device (301) when the communication device (301) accesses the mobile communications network (320) via the initializing profile, wherein the subscriber profile comprises a unique subscriber ID, in particular a unique IMSI.

5. The method (500) according to any one of the preceding claims, wherein the communication profile is an initializing profile and wherein the second subnetwork (321b) is configured to execute one or several of the subsequent steps when the communication device (301) accesses the mobile communications network (320) via the initializing profile: blocking the communication device (301); deleting the initializing profile on the communication device (301); informing the owner or producer of the communication device (301) that the mobile communications network (320) has been accessed with the lost communication device; displaying a telephone number of the owner of the communication device (301) on the communication device; establishing a communication connection to a telephone number of the owner of the communication device (301).

6. The method (500) according to any one of the preceding claims, wherein the first subnetwork (321a) and the second subnetwork (321b) are logically decoupled from each other.

7. A network management entity (325) for a 5G mobile communications network (320) with a plurality of network slices, wherein the network management entity (325) is configured to:
allocate a communication device (301) to a first subnetwork (321a) of the mobile communications network (320), wherein the communication device (301) comprises a communication profile for establishing a communication connection to the mobile communications network (320) and wherein the first subnetwork (321a) is configured as first network slice (321a) of the mobile communications network (320);
responsive to a notification that the communication device (301) got lost, allocating the communication device (301) to a second subnetwork (321b) of the mobile communications network (320), wherein the second subnetwork (321b) is configured as second network slice (321b) of the mobile communications network (320).

8. The network management entity (325) according to claim 7, wherein the first subnetwork (321a) is configured to provide the communication device (301) with a first set of services of the mobile communications network (320), and the second subnetwork (321b) is configured to provide the communication device (301) with a second set of services of the mobile communications network (320), wherein the first set of services and the second set of services comprise different services of the mobile communications network (320).

9. The network management entity (325) according to claim 7 or 8, wherein the first subnetwork (321a) is configured to enable the communication device (301) to communicate with other communication devices via the mobile communications network (320).

10. The network management entity (325) according to any one of claims 7 to 9, wherein the communication profile is an initializing profile and wherein the first subnetwork (321a) is configured to provide a subscriber profile on the communication device (301) when the communication device (301) accesses the mobile communications network (320) via the initializing profile, wherein the subscriber profile comprises a unique subscriber ID, in particular a unique IMSI.

11. The network management entity (325) according to any one of claims 7 to 10, wherein the communication profile is an initializing profile and wherein the second subnetwork (321b) is configured to execute one or several of the subsequent actions when the communication device (301) accesses the mobile communications network (320) via the initializing profile: blocking the communication device (301); deleting the initializing profile on the communication device (301); informing the owner or producer of the communication device (301) that the mobile communications network (320) has been accessed with the lost communication device; displaying a telephone number of the owner of the communication device (301) on the communication device (301); establishing a communication connection to a telephone number of the owner of the communication device (301).

12. The network management entity (325) according to any one of claims 7 to 11, wherein the first subnetwork (321a) and the second subnetwork (321b) are logically decoupled from each other.

13. The network management entity (325) according to any one of claims 7 to 12, wherein the network management entity (325) is an SDN orchestrator and/or an SDN controller.

## Revendications

1. Procédé (500) pour le fonctionnement d'un réseau de téléphonie mobile 5G (320) à plusieurs tranches de réseau, ledit procédé (500) comprenant :
l'affectation (501) d'un appareil de communication (301) à un premier sous-réseau (321a) du réseau de téléphonie mobile (320), ledit appareil de communication (301) comprenant un profil de communication pour l'établissement d'une liaison de communication vers le réseau de téléphonie mobile (320) et le premier sous-réseau (321a) étant prévu comme première tranche de réseau (321a) du réseau de téléphonie mobile (320) ; et,
en réponse à un message selon lequel l'appareil de communication (301) a disparu, l'affectation (503) de l'appareil de communication (301) à un deuxième sous-réseau (321b) du réseau de téléphonie mobile (320), ledit deuxième sous-réseau (321b) étant prévu comme deuxième tranche de réseau (321b) du réseau de téléphonie mobile (320).

2. Procédé (500) selon la revendication 1, où le premier sous-réseau (321a) est prévu pour fournir à l'appareil de communication (301) un premier ensemble de services du réseau de téléphonie mobile (320), et le deuxième sous-réseau (321b) est prévu pour fournir à l'appareil de communication (301) un deuxième ensemble de services du réseau de téléphonie mobile (320), le premier ensemble de services et le deuxième ensemble de services comprenant des services différents du réseau de téléphonie mobile (320).

3. Procédé (500) selon la revendication 1 ou la revendication 2, où le premier sous-réseau (321a) est prévu pour permettre à l'appareil de communication (301) de communiquer avec d'autres appareils de communication sur le réseau de téléphonie mobile (320).

4. Procédé (500) selon l'une des revendications précédentes, où le profil de communication est un profil d'initialisation, et où le premier sous-réseau (321a) est prévu pour fournir un profil d'abonné sur l'appareil de communication (301) en cas d'accès de l'appareil de communication (301) au réseau de téléphonie mobile (320) au moyen du profil d'initialisation, le profil d'abonné comprenant une identification univoque d'abonné, en particulier une IMSI univoque.

5. Procédé (500) selon l'une des revendications précédentes, où le profil de communication est un profil d'initialisation et où le deuxième sous-réseau (321b) est prévu pour exécuter une ou plusieurs des étapes suivantes en cas d'accès de l'appareil de communication (301) au réseau de téléphonie mobile (320) au moyen du profil d'initialisation : blocage de l'appareil de communication (301) ; suppression du profil d'initialisation sur l'appareil de communication (301) ; signalement au propriétaire ou au fabricant de l'appareil de communication (301) qu'un accès au réseau de téléphonie mobile (320) a été effectué avec l'appareil de communication disparu ; affichage sur l'appareil de communication d'un numéro d'appel du propriétaire de l'appareil de communication (301) ; établissement d'une liaison de communication vers un numéro d'appel du propriétaire de l'appareil de communication (301).

6. Procédé (500) selon l'une des revendications précédentes, où le premier sous-réseau (321a) et le deuxième sous-réseau (321b) sont découplés logiquement l'un de l'autre.

7. Entité (325) de gestion de réseau pour un réseau de téléphonie mobile 5G (320) à plusieurs tranches de réseau, ladite entité (325) de gestion de réseau étant prévue pour :
affecter un appareil de communication (301) à un premier sous-réseau (321a) du réseau de téléphonie mobile (320), ledit appareil de communication (301) comprenant un profil de communication pour l'établissement d'une liaison de communication vers le réseau de téléphonie mobile (320) et le premier sous-réseau (321a) étant prévu comme première tranche de réseau (321a) du réseau de téléphonie mobile (320) ;
pour affecter (503) l'appareil de communication (301) à un deuxième sous-réseau (321b) du réseau de téléphonie mobile (320) en réponse à un message selon lequel l'appareil de communication (301) a disparu, ledit deuxième sous-réseau (321b) étant prévu comme deuxième tranche de réseau (321b) du réseau de téléphonie mobile (320).

8. Entité (325) de gestion de réseau selon la revendication 7, où le premier sous-réseau (321a) est prévu pour fournir à l'appareil de communication (301) un premier ensemble de services du réseau de téléphonie mobile (320), et le deuxième sous-réseau (321b) est prévu pour fournir à l'appareil de communication (301) un deuxième ensemble de services du réseau de téléphonie mobile (320), le premier ensemble de services et le deuxième ensemble de services comprenant des services différents du réseau de téléphonie mobile (320).

9. Entité (325) de gestion de réseau selon la revendication 7 ou la revendication 8, où le premier sous-réseau (321a) est prévu pour permettre à l'appareil de communication (301) de communiquer avec d'autres appareils de communication sur le réseau de téléphonie mobile (320).

10. Entité (325) de gestion de réseau selon l'une des revendications 7 à 9, où le profil de communication est un profil d'initialisation, et où le premier sous-réseau (321a) est prévu pour fournir un profil d'abonné sur l'appareil de communication (301) en cas d'accès de l'appareil de communication (301) au réseau de téléphonie mobile (320) au moyen du profil d'initialisation, le profil d'abonné comprenant une identification univoque d'abonné, en particulier une IMSI univoque.

11. Entité (325) de gestion de réseau selon l'une des revendications 7 à 10, où le profil de communication est un profil d'initialisation et où le deuxième sous-réseau (321b) est prévu pour exécuter une ou plusieurs des étapes suivantes en cas d'accès de l'appareil de communication (301) au réseau de téléphonie mobile (320) au moyen du profil d'initialisation : blocage de l'appareil de communication (301); suppression du profil d'initialisation sur l'appareil de communication (301) ; signalement au propriétaire ou au fabricant de l'appareil de communication (301) qu'un accès au réseau de téléphonie mobile (320) a été effectué avec l'appareil de communication disparu ; affichage sur l'appareil de communication (301) d'un numéro d'appel du propriétaire de l'appareil de communication (301) ; établissement d'une liaison de communication vers un numéro d'appel du propriétaire de l'appareil de communication (301).

12. Entité (325) de gestion de réseau selon l'une des revendications 7 à 11, où le premier sous-réseau (321a) et le deuxième sous-réseau (321b) sont découplés logiquement l'un de l'autre.

13. Entité (325) de gestion de réseau selon l'une des revendications 7 à 12, où l'entité (325) de gestion de réseau est un orchestrateur SDN et/ou un contrôleur SDN.
